# EUROPÄISCHE PATENTSCHRIFT

(11) **EP 2 244 925 B1**
(45) Veröffentlichungstag und Bekanntmachung des Hinweises auf die Patenterteilung: **03.04.2013**
(21) Anmeldenummer: 09713751.7
(22) Anmeldetag: 18.02.2009
(51) Int. Cl.: B62D 1/184, B62D 1/19

(54) **VERSTELLBARE LENKSÄULE FÜR EIN KRAFTFAHRZEUG**
ADJUSTABLE STEERING COLUMN FOR A MOTOR VEHICLE
COLONNE DE DIRECTION RÉGLABLE POUR UNE AUTOMOBILE

(30) Priorität: 28.02.2008 DE 102008011620
(43) Veröffentlichungstag der Anmeldung: 03.11.2010
(73) Patentinhaber: ThyssenKrupp Presta Aktiengesellschaft, 9492 Eschen (LI)
(72) Erfinder: KLUKOWSKI, Christoph, FL-9487 Gamprin (LI); GALEHR, Robert, FL-9493 Mauren (LI)
(74) Vertreter: Hofmann, Ralf U.
(86) Internationale Anmeldenummer: PCT/EP2009/001158
(87) Internationale Veröffentlichungsnummer: WO 2009/106257

(56) Entgegenhaltungen:
- EP-A1- 1 806 269
- WO-A-03/018384
- WO-A1-2009/105798
- FR-A- 2 779 698
- GB-A- 2 299 844
- JP-A- 2001 158 365
- JP-A- 2004 182 014
- US-A- 3 747 431
- US-A- 3 750 492

## Beschreibung

Die Erfindung bezieht sich auf eine verstellbare Lenksäule für ein Kraftfahrzeug, die eine Feststelleinrichtung aufweist, welche mittels eines zwischen einer Offen- und einer Schließstellung verstellbaren Betätigungshebels öffen- und schließbar ist und in deren geöffnetem Zustand die Lenksäule verstellbar ist und in deren geschlossenem Zustand die eingestellte Position der Lenksäule fixiert ist, wobei der Betätigungshebel einen an ein Bedienende anschließenden Bedienabschnitt und einen diesen mittels mindestens eines Gleit- und/oder Wälzlagers in eine Verschieberichtung lagernden Lagerabschnitt umfasst.

Verstellbare Lenksäulen sind in vielen verschiedenen Ausführungsformen bekannt. Die Feststelleinrichtungen können hierbei über miteinander verspannte Reibflächen kraftschlüssig oder durch ineinander greifende Verzahnungen formschlüssig wirken. Die Verstellbarkeit kann sich auf die achsiale Richtung der Lenksäule und/oder die Neigungsrichtung bzw. Höhenrichtung beziehen.

Um für den Fall eines Fahrzeugcrashes den Schutz des Fahrzeugführers zu verbessern, insbesondere gegenüber einem Aufprall des Knies auf den Betätigungshebel der Feststelleinrichtung, wurde in der WO 03/018 384 A1 bereits vorgeschlagen, den Betätigungshebel als Deformationselement auszubilden, sodass er durch einen Aufprall unter Energieaufnahme deformierbar ist. Zu diesem Zweck ist er vorzugsweise mit einer Sollknickstelle versehen. Die zur Deformation des Betätigungshebels führende Kraft muss hierbei ausreichend hoch gewählt werden, um eine Deformation im Normalbetrieb auszuschließen. Weiters muss der Betätigungshebel mit einer entsprechenden Geometrie ausgebildet werden, damit es durch eine im Crashfall in Richtung zur Fahrzeugfront wirkende Aufprallkraft zu einer Deformation des Betätigungshebels kommt.

Aus der DE 10 141 551 A1 ist weiters eine verstellbare Lenksäule bekannt, bei der ein Hebelteil des Betätigungshebels mit einem Lagerteil über einen Abreißmechanismus verbunden ist, durch welchen sich das Hebelteil im Crashfall vom Lagerteil lösen kann. Die in dieser Schrift gezeigte Ausbildung ist relativ aufwendig.

Die US 7 125 046 B2 zeigt eine verstellbare Lenksäule, bei der sich im Crashfall das Mantelrohr in Richtung zur Fahrzeugfront verschieben kann. Hierbei wird auch der Betätigungshebel für den Klemmmechanismus in Richtung zur Frontseite des Fahrzeugs bewegt, wodurch der Knieschutz des Fahrers verbessert werden soll.

Aus der US 6 082 216 ist weiters ein nicht gattungsgemäßer Schalthebel eines Kraftfahrzeuges bekannt, der in eine achsiale Öffnung eines Hebelhalters ragt. Von der Innenseite der Wandung der Öffnung springen Rippen hervor. Durch eine auf den Schalthebel wirkende Aufprallkraft kann dieser unter Verformung der Rippen weiter in die Öffnung des Hebelhalters eingeschoben werden.

Lenksäulen der eingangs genannten Art mit teleskopierbaren Betätigungshebeln gehen aus der GB 2 299 844 A und FR 2 779 698 A1 hervor. Um einen lang in den Passagierraum vorstehenden Betätigungshebel zu vermeiden und dennoch eine ausreichende Bedienkraft zu ermöglichen, ist bei diesen Lenksäulen in einer passiven Stellung des Betätigungshebels ein Bedienabschnitt in einen diesen verschiebbar lagernden Lagerabschnitt des Betätigungshebels eingeschoben und zur Verstellung der eingestellten Position der Lenksäule kann der Bedienabschnitt aus dem Lagerabschnitt ausgezogen werden. Um den Bedienabschnitt nach Abschluss der Betätigung wieder einzuziehen, ist eine Zugfeder zwischen dem Bedienabschnitt und dem Lagerabschnitt vorgesehen.

Aufgabe der Erfindung ist es eine verstellbare Lenksäule der eingangs genannten Art bereit zu stellen, bei der bei einer einfachen Ausbildung ein effektiver Schutz des Fahrers gegenüber einem Aufprall auf den Betätigungshebel, insbesondere im Crashfall, erreicht wird.

Erfindungsgemäß gelingt dies durch eine Lenksäule mit den Merkmalen des Patentanspruchs 1.

Der Betätigungshebel der Feststelleinrichtung einer erfindungsgemäßen Lenksäule umfasst einen an ein Bedienende des Betätigungshebels anschließenden Bedienabschnitt und einen diesen mittels mindestens eines Gleit- und/oder Wälzlagers lagernden Lagerabschnitt. Durch das mindestens eine Gleit- und/oder Wälzlager wird eine Verschieberichtung zur Verschiebung des Bedienabschnitts gegenüber dem Lagerabschnitt vorgegeben. Durch eine in die Verschieberichtung auf den Bedienabschnitt einwirkende Aufprallkraft kann eine Verschiebung (= lineare Verstellung) des Bedienabschnitts gegenüber dem Lagerabschnitt in die Verschieberichtung ausgelöst werden.

In einer Ausführungsform der Erfindung ist hierbei kein Überschreiten eines Schwellenwertes für die Größe der Aufprallkraft erforderlich. In einer anderen Ausführungsform kommt es erst zu einer Verschiebung des Bedienabschnitts gegenüber dem Lagerabschnitt, wenn die Größe der Aufprallkraft einen Schwellenwert überschreitet. Zu diesem Zweck kann mindestens ein zwischen dem Bedienabschnitt und dem Lagerabschnitt wirkendes Fixierelement vorgesehen sein, welches die Verschiebung des Bedienabschnitts gegenüber dem Lagerabschnitt blockiert, wenn auf den Bedienabschnitt eine Kraft in die Verschieberichtung einwirkt, deren Größe unterhalb des Schwellenwertes liegt. Das Fixierelement kann zwischen dem Bedienabschnitt und dem Lagerabschnitt klemmend, also reibschlüssig und/oder formschlüssig wirken. Im Falle der formschlüssigen Wirkung kann insbesondere vorgesehen sein, dass das Fixierelement bei einer ausreichend großen Kraft zerstört wird, beispielsweise durch die Ausbildung des Fixierelements in Form eines Scherbolzens. Auch eine Freigabe der Verschiebung durch eine Formänderung des Fixierelements ist denkbar und möglich. Das Fixierelement kann hierbei nur zu Beginn der Verschiebung oder über den gesamten Verschiebeweg wirken, beispielsweise indem es als Langloch ausgebildet ist, welches durch einen in diesem verschobenen Bolzen mit einem größeren Durchmesser aufgeweitet wird.

Die Verschiebung des Bedienabschnitts gegenüber dem Lagerabschnitt kann nicht nur durch eine in die Verschieberichtung wirkende Aufprallkraft sondern auch durch eine winkelig zur Verschieberichtung stehende Aufprallkraft ausgelöst werden. Vorzugsweise ist dieser Winkelbereich möglichst groß ausgebildet, umfasst beispielsweise einen Bereich von 0° bis 45° zur Verschieberichtung. Die Größe des Winkelbereichs hängt u.a. von der Ausbildung der Gleit- bzw. Wälzlagerung zwischen dem Bedienabschnitt und dem Lagerabschnitt ab.

In einer vorteilhaften Ausführungsform der Erfindung ist mindestens eine zwischen dem Bedienabschnitt und Lagerabschnitt wirkende Feder vorgesehen, wobei der Bedienabschnitt zumindest über einen Abschnitt seines möglichen Verschiebeweges gegenüber dem Lagerabschnitt gegen die Kraft dieser Feder verschoben wird. Die Feder kann hierbei bei einer Verschiebung des Bedienabschnitts gegenüber dem Lagerabschnitt von Anfang dieser Verschiebung an wirken. Insbesondere für das Ausführungsbeispiel, in welchem zwischen dem Bedienabschnitt und Lagerabschnitt mindestens ein Fixierelement zur Verhinderung einer Verschiebung bei niedrigen einwirkenden Kräften angeordnet ist, kann auch vorgesehen sein, dass eine Feder vorgesehen ist, die bei der Verschiebung nicht von Beginn an sondern erst zu einem späteren Abschnitt wirkt, beispielsweise um einen Endaufprall am Ende des Verschiebeweges abzufedern.

Es kann vorgesehen sein, dass eine von Anfang der Verschiebung des Bedienabschnitts gegenüber dem Lagerabschnitt an wirkende Feder mit einer Vorspannung versehen ist, sodass eine Verschiebung des Bedienabschnitts gegenüber dem Lagerabschnitt erfolgt, wenn durch die Aufprallkraft die Vorspannkraft der Feder überwunden wird.

Vorzugsweise ragt der Lagerabschnitt in eine in die Verschieberichtung ausgedehnte Ausnehmung, insbesondere in eine sacklochartige Ausnehmung des Bedienabschnitts. Auch die umgekehrte Ausbildung ist denkbar und möglich, bei welcher der Bedienabschnitt in eine in die Verschieberichtung ausgedehnte, insbesondere sacklochartige Ausnehmung des Lagerabschnitts ragt. Falls zwischen dem Bedienabschnitt und dem Lagerabschnitt eine Feder vorgesehen sein soll, kann diese in diesen Ausführungsformen vorteilhafterweise in dieser sacklochartigen Ausnehmung angeordnet sein.

Weitere Vorteile und Einzelheiten der Erfindung werden im Folgenden anhand der beiliegenden Zeichnungen erläutert. In dieser zeigen:
Fig. 1 eine Schrägsicht einer Lenksäule mit einem Betätigungshebel gemäß der Erfindung;
Fig. 2 eine Explosionsdarstellung des Betätigungshebels gemäß einer ersten Ausführungsform der Erfindung;
Fig. 3 einen Längsmittelschnitt durch den Crashhebel gemäß der ersten Ausführungsform;
Fig. 4 einen Längsmittelschnitt entsprechend Fig. 3 im gegenüber Fig. 3 verschobenen Zustand des Bedienabschnitts;
Fig. 5 bis 7 Darstellungen analog den Fig. 2-4 einer zweiten Ausführungsform des Betätigungshebels;
Fig. 8 bis 10 Darstellungen entsprechend den Fig. 2-4 einer dritten Ausführungsform des Betätigungshebels;
Fig. 11 einen Schnitt entlang der Linie AA von Fig. 9;
Fig. 12 bis 14 Darstellungen analog den Fig. 2-4 einer vierten Ausführungsform des Betätigungshebels;
Fig. 15 bis 17 Darstellungen analog den Fig. 2-4 einer fünften Ausführungsform der Erfindung;
Fig. 18 einen Schnitt entlang der Linie BB von Fig. 16;
Fig. 19 einen Längsmittelschnitt durch einen Betätigungshebel entsprechend einer sechsten Ausführungsform der Erfindung;
Fig. 20 eine Explosionsdarstellung eines Betätigungshebels gemäß einer siebten Ausführungsform der Erfindung.

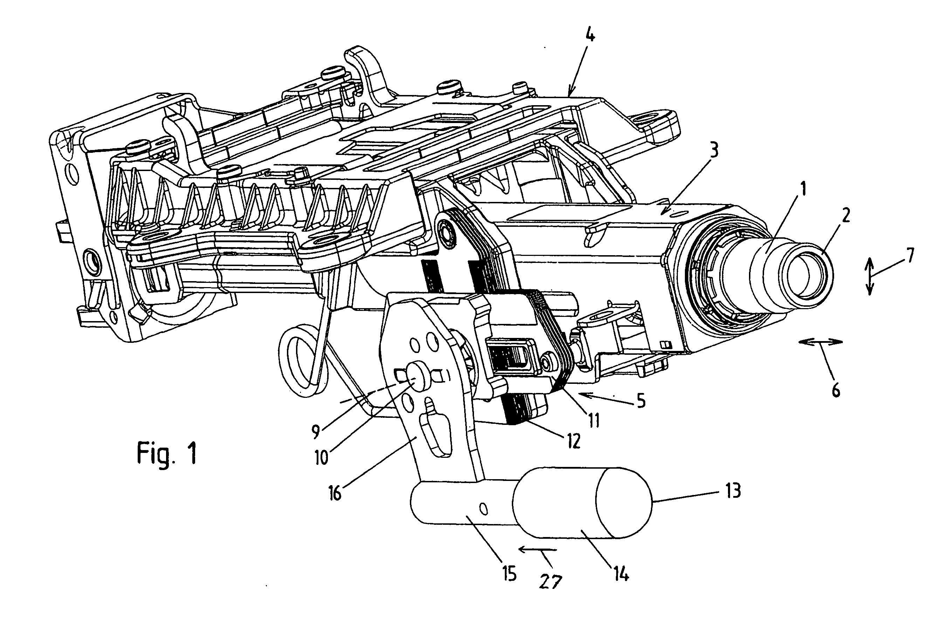

Eine mögliche Ausführungsform einer Lenksäule, bei der ein Betätigungshebel gemäß der Erfindung eingesetzt werden kann, ist in Fig. 1 dargestellt. Die Lenksäule umfasst eine Lenkspindel 1, von der ein an ein lenkradseitiges Ende 2 anschließender Abschnitt in einer Manteleinheit 3 drehbar gelagert ist. Die Manteleinheit 3 wird von einer am Chassis eines Kraftfahrzeuges anbringbaren Trageinheit 4 getragen. Im geöffneten Zustand einer Feststelleinrichtung 5 kann die Manteleinheit 3 gegenüber der Trageinheit 4 verstellt werden, im gezeigten Ausführungsbeispiel in eine Verstellrichtung 6, in der die Lenksäule in achsialer Richtung der Lenkspindel 1 verstellbar ist, und in eine Verstellrichtung 7, in der die Lenksäule in der Neigung bzw. Höhe der Lenkspindel 1 verstellbar ist. Auch eine Verstellung nur in achsialer Richtung oder nur in der Höhe bzw. Neigung ist denkbar und möglich.

Die Feststelleinrichtung 5 wird mittels eines Betätigungshebels 8 geöffnet und geschlossen. Der Betätigungshebel 8 wird hierbei um eine von einem Spannbolzen 10 gebildete Achse 9 verschwenkt. Die Feststelleinrichtung wirkt bei der in Fig. 1 dargestellten Lenksäule reibschlüssig, indem im geschlossenen Zustand der Feststelleinrichtung Reibflächen der Manteleinheit 3 bzw. von an dieser angebrachten Lamellen 11 und Reibflächen der Trageinheit 4 bzw. von an dieser angebrachten Lamellen 12 über den Spannbolzen 10 gegeneinander verspannt werden.

Lenksäulen mit reibschlüssig wirkenden Feststelleinrichtungen, mit und ohne Lamellen, sind bekannt. Die Feststelleinrichtung könnte auch formschlüssig durch ineinander eingreifende Verzahnungen wirken. Lenksäulen mit formschlüssig wirkenden Feststelleinrichtungen sind ebenfalls bekannt.

Zumindest in der Schließstellung des Betätigungshebels 8 ist dieser zu seinem freien Bedienende 13 hin von der Fahrzeugfront weggerichtet, also dem Fahrer zugewandt. Im Falle eines Fahrzeugcrashes kann somit der Fahrer, insbesondere mit seinem Knie auf das Bedienende 13 des Betätigungshebels 8 aufprallen. Das Bedienende 13 ist zumindest in der Schließstellung des Betätigungshebels 8 einer im Falle eines Fahrzeugcrashes einwirkenden, zur Fahrzeugfront gerichteten Aufprallkraft entgegengerichtet. Verschiedene Ausbildungsformen eines Betätigungshebels mit einem Aufprallschutz für den Fahrer werden im Folgenden erläutert.

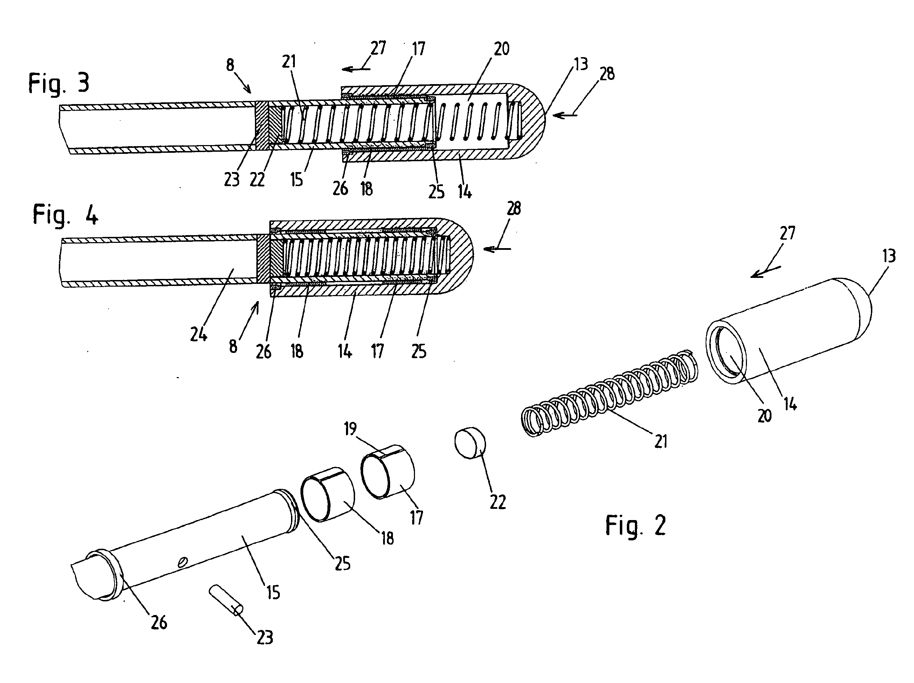

Ein erstes Ausführungsbeispiel für einen Betätigungshebel gemäß der Erfindung ist in den Fig. 2 bis 4 dargestellt. Der Betätigungshebel 8 umfasst einen an das Bedienende 13 anschließenden Bedienabschnitt 14, über welchen die Bedienung des Betätigungshebels 8 erfolgt, und einen den Bedienabschnitt 14 lagernden Lagerabschnitt 15. Der Lagerabschnitt 15 kann sich, beispielsweise in einem gebogenen Verlauf bis zur Achse 9 erstrecken oder es kann zwischen dem Lagerabschnitt 15 und der Achse 9 mindestens ein weiterer Abschnitt 16 des Betätigungshebels 8 (vgl. Fig. 1) vorhanden sein.

Der Bedienabschnitt 14 ist gegenüber dem Lagerabschnitt 15 über eine Gleitlagerung verschiebbar gelagert. Hierbei sind im gezeigten Ausführungsbeispiel zwei separate Lagerteile 17, 18 vorhanden, welche hülsenförmig bzw. in Form von Gleitlagerbuchsen ausgebildet sind, die im Zwischenraum zwischen dem Bedienabschnitt 14 und dem Lagerabschnitt 15 achsial hintereinander liegend (ohne oder mit Abstand) angeordnet sind.

Denkbar und möglich wäre es auch mehr als zwei in achsialer Richtung hintereinander angeordnete hülsenförmige Lagerteile 17, 18 vorzusehen. Auch der Einsatz eines einzelnen hülsenförmigen Lagerteils ist denkbar und möglich.

Die hülsenförmigen Lagerteile 17, 18 können beispielsweise wie dargestellt jeweils einen vom einen bis zum anderen Ende reichenden Schlitz 19 aufweisen, um durch diese geschlitzte Ausbildung einen in gewissem Umfang variablen Durchmesser zu erreichen.

Der Lagerabschnitt 15 ragt in eine sacklochartige Ausnehmung 20 des Bedienabschnitts 14, der hier von einem hülsenförmigen Handgriff gebildet wird.

Zwischen dem Bedienabschnitt 14 und dem Lagerabschnitt 15 wirkt eine Feder 21. Diese stützt sich einerseits am Boden der sacklochartigen Ausnehmung 20 des Bedienabschnitts 14, andererseits über eine Anlagescheibe 22 an einem Bolzen 23 ab, welcher am Lagerabschnitt 15 befestigt ist und den inneren Hohlraum 24 des hier rohrförmig ausgebildeten Lagerabschnitts 15 quert.

Die Feder 21 kann in der Ausgangsstellung des Bedienabschnitts 14 (Fig. 3) eine entsprechende Vorspannung aufweisen.

Die achsiale Verschiebung der Lagerteile 17, 18 im Ringraum zwischen der äußeren Oberfläche des Lagerabschnitts 15 und der inneren Oberfläche des Bedienabschnitts 14 ist durch Ringe 25, 26 begrenzt, von denen der eine am Bedienabschnitt 14 und der andere am Lagerabschnitt 15 festgelegt ist. Die Ringe 25, 26 weisen Anlaufschrägen auf, an die die Lagerteile 17, 18 in der Ausgangsstellung des Bedienabschnitts 14 (Fig. 3) durch die Kraft der Feder 21 angedrückt werden. Der Ring 25 besitzt eine nach außen gerichtete Anlaufschräge, wodurch das Lagerteil 17 aufgeweitet wird und an die innere Oberfläche des Bedienabschnitts 14 angedrückt wird. Der Ring 26 besitzt eine nach innen gerichtete Anlaufschräge, wodurch das Lagerteil 18 zusammengedrückt und an die äußere Oberfläche des Lagerabschnitts 15 angedrückt wird. Es wird daher in der Ausgangsstellung eine Spielfreiheit des Bedienabschnitts 14 gegenüber dem Lagerabschnitt 15 erreicht.

Im Falle einer in die Verschieberichtung 27 wirkenden Aufprallkraft 28 auf das Bedienende 13 des Bedienabschnitts 14 kommt es zu einer Verschiebung des Bedienabschnitts 14 gegenüber dem Lagerabschnitt 15 gegen die Kraft der Feder 21, sodass ein solcher Aufprall abgefedert werden kann.

Auch bei einer Aufprallkraft 28, die einen Winkel zur Verschieberichtung 27 einschließt, beispielsweise im Winkelbereich von 0-45° gegenüber der Verschieberichtung 27 liegt, kommt es durch die in Verschieberichtung 27 wirkende Kraftkomponente zur Verschiebung des Bedienabschnitts 14. Die Lagerteile 17, 18 wirken hier bei einem Verkanten des Bedienabschnitts 14 gegenüber dem Lagerabschnitt 15 entgegen.

Die Abstützung der Feder 21 am Lagerabschnitt 15 könnte auch in einer anderen Weise erfolgen, beispielsweise an einer Stufe der inneren Ausnehmung des Lagerabschnitts oder am Boden einer sacklochartigen Ausnehmung des Lagerabschnitts 15.

Die Lagerteile 17, 18 könnten auch an einem der beiden Abschnitte 14, 15 angebracht sein oder das Lagerteil 17 könnte am Abschnitt 15 und das Lagerteil 18 am Abschnitt 14 angebracht sein.

Die Feder 21 bildet auch ein Rückstellelement, durch welches der Bedienabschnitt 14 nach dem Ende des Einwirkens der Aufprallkraft 28 wiederum in die Ausgangslage zurückgestellt wird.

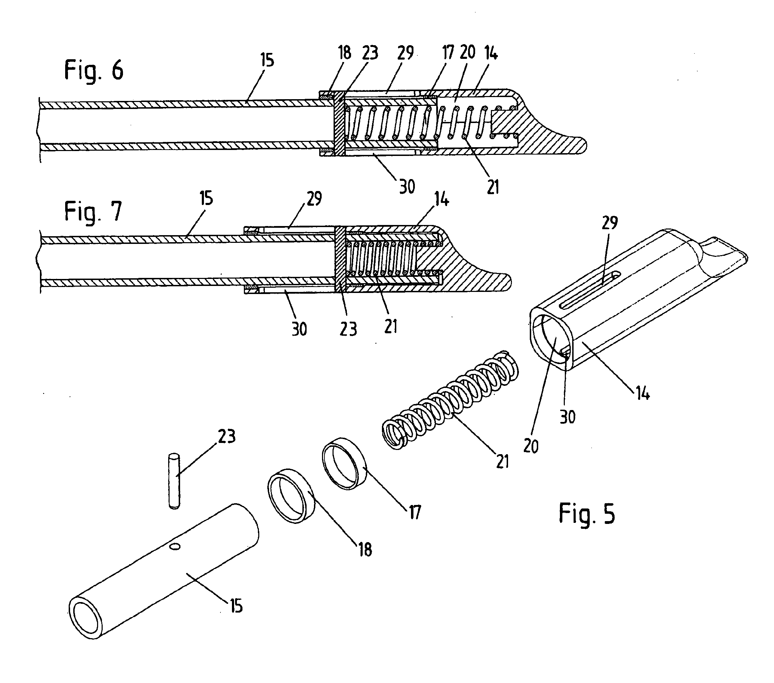

Ein zweites Ausführungsbeispiel der Erfindung ist in den Fig. 5 bis 7 dargestellt. Der Unterschied zu dem zuvor beschriebenen Ausführungsbeispiel besteht hier im Wesentlichen in der Verdrehsicherung des Bedienabschnitts 14 gegenüber dem Lagerabschnitt 15, d.h. der Bedienabschnitt 14 kann gegenüber dem Lagerabschnitt 15 in die Verschieberichtung 27 verschoben aber nicht um dessen Längsachse verdreht werden. Diese Verdrehsicherung wird in diesem Ausführungsbeispiel dadurch erreicht, dass der Bolzen 23, an dem sich die Feder 21 abstützt beidseitig über den Lagerabschnitt 15 des Betätigungshebels 8 nach außen vorsteht und diese vorstehenden Abschnitte in Langlöcher 29, 30 im Bedienabschnitt 14 ragen.

Diese Führung könnte auch durch einen anderen Bolzen als denjenigen bewirkt werden, an dem sich die Feder 21 abstützt. Vorsprünge am Lagerabschnitt 15 könnten auch in anderer Form als durch die vorstehenden Enden eines Bolzens 23 ausgebildet werden, beispielsweise auch einstückig mit dem Lagerabschnitt 15. Von den Endabschnitten eines Bolzens oder in anderer Form ausgebildete Vorsprünge könnten auch in nicht durch den Bedienabschnitt 14 durchgehende Ausnehmungen, die sich in achsialer Richtung des Bedienabschnitts 14 erstrecken, eingreifen, also in nutförmige Ausnehmungen.

Auch eine umgekehrte Ausbildung, bei der Vorsprünge am Bedienabschnitt 14 in in achsialer Richtung sich erstreckende Ausnehmungen im Lagerabschnitt 15 eingreifen, ist denkbar und möglich.

Eine Längsführung des Bedienabschnitts 14 könnte auch auf andere Weise erreicht werden, beispielsweise über eine von der Kreisform abweichende Querschnittsform der Ausnehmung 20 im Bedienabschnitt 14 und eine korrespondierende äußere Form des Lagerabschnitts 15.

Bei der in diesem Ausführungsbeispiel dargestellten Gleitlagerung sind die Lagerteile 17, 18 arn Bedienabschnitt 14 angebracht (an dessen innerer, die Ausnehmung 20 begrenzenden Oberfläche). Auch eine Anbringung am Lagerabschnitt 15 oder eine Anbringung des Lagerteils 17 am Lagerabschnitt 15 und des Lagerteils 18 am Bedienabschnitt 14 oder eine achsial verschiebbare Anordnung im Zwischenraum zwischen dem Lagerabschnitt 15 und Bedienabschnitt 14 ist denkbar und möglich.

Die Abstützung der Feder 21 könnte auch wiederum in einer anderen Weise als über einen Bolzen 23 erfolgen.

Die Feder 21 bildet auch ein Rückstellelement zur Rückstellung des Bedienabschnitts 14 nach dem Ende des Einwirkens der Aufprallkraft 28.

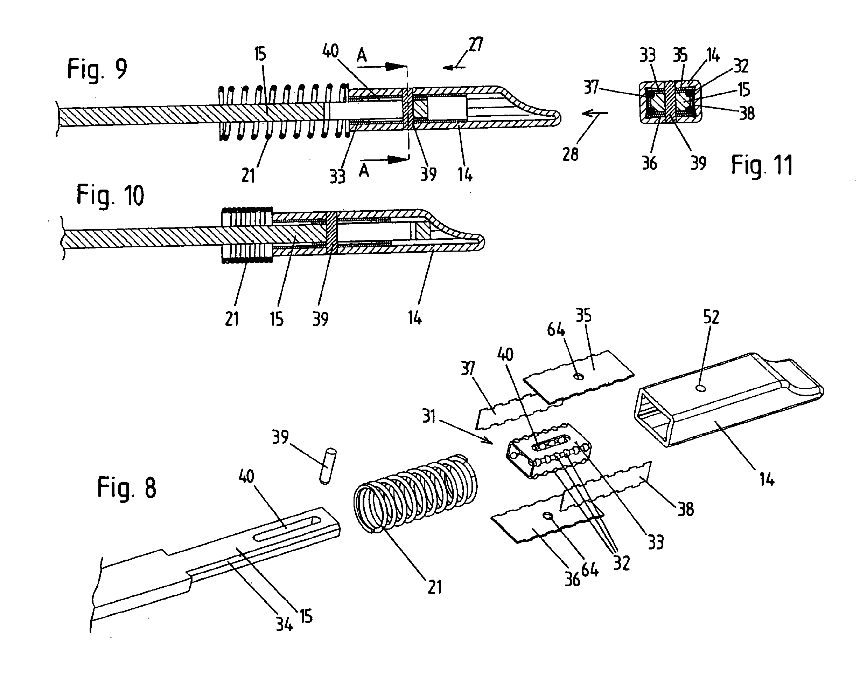

Das in den Fig. 8 bis 11 dargestellte dritte Ausführungsbeispiel unterscheidet sich von den zuvor beschriebenen Ausführungsbeispielen insbesondere durch den Einsatz eines Wälzlagers 31 zur verschiebbaren Lagerung des Bedienabschnitts 14 gegenüber dem Lagerabschnitt 15. Als Wälzkörper dienen hier in einem Käfig 33 gehaltene Kugeln 32. Die Kugeln 32 laufen einerseits auf Laufbahnen 34 des Lagerabschnitts 15, andererseits auf den inneren Oberflächen von zwischen dem Käfig 33 und dem Bedienabschnitt 14 eingesetzten Federplatten 35-38.

Der Bedienabschnitt 14 ist bei Einwirken einer Aufprallkraft 28 wiederum in eine achsiale Verschieberichtung 27 gegenüber dem Lagerabschnitt 15 verschiebbar, und zwar gegen die Kraft einer Feder 21, die sich einerseits am Bedienabschnitt 14, andererseits am Lagerabschnitt 15 abstützt, die auch ein Rückstellelement bildet. Die Abstützung am Lagerabschnitt 15 kann wie dargestellt an einer Stufe des Lagerabschnitts 15 oder in anderer Weise erfolgen. Die Abstützung am Bedienabschnitt 14 kann wie dargestellt am vom Bedienende 13 abgelegenen stirnseitigen Ende des Bedienabschnitts 14 oder in anderer Weise erfolgen.

Durch die dargestellte rechteckige Ausbildung des Käfigs 33 und der entsprechenden Ausbildung der Führungsbahnen wird bereits eine achsiale Führung bzw. eine Verdrehsicherung des Bedienabschnitts 14 gegenüber dem Lagerabschnitt 15 erreicht. Zur zusätzlichen achsialen Führung des Bedienabschnitts 14 gegenüber dem Lagerabschnitt 15 dient im gezeigten Ausführungsbeispiel ein Bolzen 39, der am Bedienabschnitt 14 angebracht ist und ein in achsialer Richtung sich erstreckendes Langloch 40 im Lagerabschnitt 15 durchsetzt. Stattdessen könnte ein Bolzen auch am Lagerabschnitt 15 angebracht sein und in mindestens einem in achsialer Richtung verlaufenden Langloch des Bedienabschnitts 14 geführt sein. Der Bolzen erstreckt sich durch Langlöcher 40 im Käfig 33, wodurch auch die achsiale Verschiebbarkeit des Käfigs 33 begrenzt wird. Der Bolzen 39 ist im Bedienabschnitt 14 in Löchern 52 gehalten und erstreckt sich auch durch Löcher in den Federplatten 35, 36.

Der Bolzen 39 und das Langloch 40 könnten auch entfallen.

Vom Käfig 33 sind mehrere Reihen aus jeweils mehreren in die Verschieberichtung 27 beabstandeten Kugeln 32 gehalten.

Es könnte auch mehr als ein Kugeln 32 haltender Käfig vorhanden sein, wobei die Käfige in achsialer Richtung (mit oder ohne Abstand) aufeinander folgen.

Anstelle von Kugeln 32 können vom Käfig 33 auch andere Wälzkörper, beispielsweise Walzen gehalten sein.

Die inneren Oberflächen des Bedienabschnitts 14 weisen eine konvexe Ausbildung auf, wobei die Federplatten 35-38 durch die Wälzkörper 32 gebogen sind. Eine Spielfreiheit des Bedienabschnitts 14 gegenüber dem Lagerabschnitt 15 wird dadurch erreicht.

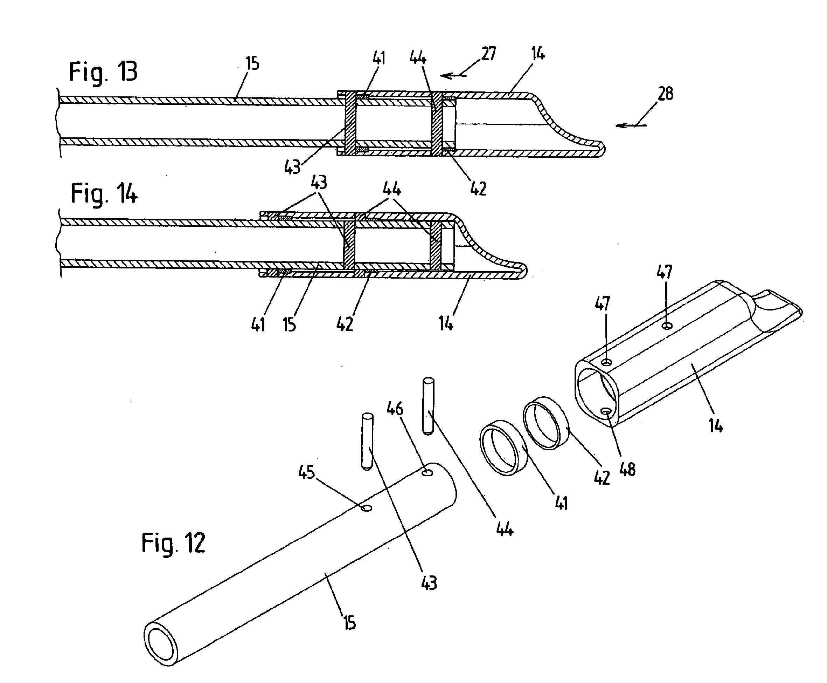

Ein viertes Ausführungsbeispiel der Erfindung ist in den Fig. 12 bis 14 dargestellt. Der Bedienabschnitt 14 des Betätigungshebels 8, der an das Bedienende 13 anschließt und an dem die Bedienung des Betätigungshebels 8 erfolgt, weist wiederum eine sacklochartige Ausnehmung 20 auf, in welche der Lagerabschnitt 15 des Betätigungshebels 8 ragt. Zwischen dem Bedienabschnitt 14 und dem Lagerabschnitt 15 ist eine Gleitlagerung ausgebildet. Zu diesem Zweck sind Lagerteile 41, 42 vorgesehen, die in Form von Gleitlagerbuchsen ausgebildet sind und an der inneren Oberfläche des Bedienabschnitts 14 gehalten sind (beispielsweise in Nuten).

Weiters sind in Form von Scherbolzen ausgebildete Fixierelemente 43, 44 vorhanden, welche in ihrem unversehrten Zustand eine Verschiebung des Bedienabschnitts 14 gegenüber dem Lagerabschnitt 15 blockieren. Diese Scherbolzen erstrecken sich im gezeigten Ausführungsbeispiel durch Querbohrungen im Lagerabschnitt 15 und ragen mit ihren aus den Querbohrungen herausstehenden Enden in Löcher 47, 48 des Bedienabschnitts 14.

Wenn auf den Bedienabschnitt 14 eine Aufprallkraft 28 wirkt, die beispielsweise parallel zur Verschieberichtung 27 ausgerichtet ist, so kommt es, wenn die Größe dieser Aufprallkraft 28 einen Schwellenwert überschreitet, zum Abscheren der als Scherbolzen ausgebildeten Fixierelemente 43, 44 und der Bedienabschnitt 14 kann sich in der Folge gegenüber dem Lagerabschnitt 15 verschieben, vgl. Fig. 14.

Wenn die Aufprallkraft 28 winkelig zur Verschieberichtung 27 steht, beispielsweise in einem Winkelbereich zwischen 0° und 45°, so wirkt die parallel zur Verschieberichtung 27 gerichtete Kraftkomponente im Sinne eines Abscherens der Fixierelemente 43, 44, wenn diese, abzüglich von zusätzlichen Reibungsverlusten durch die Querbelastung der Gleitlagerung, den Schwellenwert überschreitet.

Es könnte auch nur ein einzelnes in Form eines Scherbolzens ausgebildetes Fixierelement 43, 44 vorhanden sein. Anstelle von Scherbolzen könnten auch in anderer Form wirkende, beispielsweise klemmend wirkende Fixierelemente vorhanden sein. Die Wirkung solcher anderen Fixierelemente kann sich nur auf die Ausgangslage oder auf den gesamten möglichen Verschiebeweg oder einen mehr oder weniger großen Teil hiervon erstrecken.

Anstelle von zwei Lagerteilen 41, 42 könnten auch mehr als zwei in achsialer Richtung aufeinander folgende oder beabstandete Lagerteile vorgesehen sein oder es könnte auch nur ein einzelnes solches Lagerteil vorgesehen sein. Die Lagerteile 41, 42 könnten auch am Lagerabschnitt 15 gehalten sein oder es könnten sowohl am Bedienabschnitt 14 und am Lagerabschnitt 15 gehaltene Lagerteile 41, 42 vorgesehen sein. Die Lagerung könnte auch in analoger Weise wie im Zusammenhang mit den Fig. 2 bis 4 beschrieben ausgebildet sein, d.h. ein oder mehrere Lagerteile könnten sowohl gegenüber dem Bedienabschnitt 14 als auch gegenüber dem Lagerabschnitt 15 in deren achsiale Richtungen beweglich im Zwischenraum zwischen dem Bedienabschnitt 14 und dem Lagerabschnitt 15 angeordnet sein.

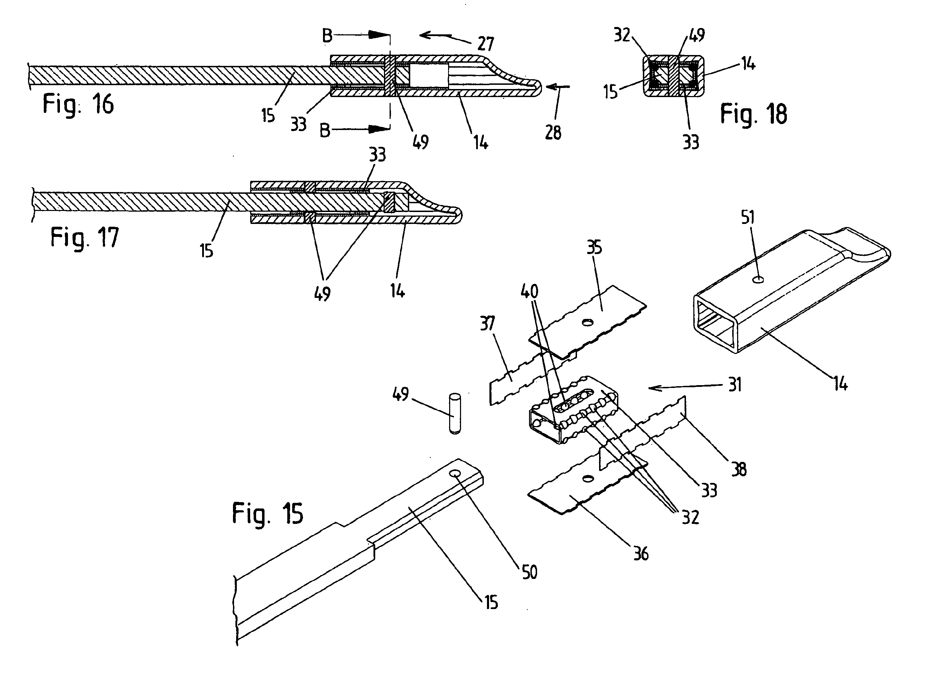

Ein fünftes Ausführungsbeispiel ist in den Fig. 15 bis 18 dargestellt. Im Unterschied zu dem zuvor beschriebenen Ausführungsbeispiel ist hier zwischen dem Bedienabschnitt 14 und dem Lagerabschnitt 15 eine Wälzlagerung vorgesehen. Die Wälzlagerung ist wie im Zusammenhang mit dem dritten Ausführungsbeispiel beschrieben ausgebildet.

Ein Fixierelement 49, welches in Form eines Scherbolzens ausgebildet ist, blockiert im unversehrten Zustand eine Verschiebung des Bedienabschnitts 14 gegenüber dem Lagerabschnitt 15. Dieses als Scherbolzen ausgebildetes Fixierelement 49 durchsetzt eine Querbohrung 50 im Bedienabschnitt 14 und ragt mit seinen Enden in Löcher 51 im Bedienabschnitt 14. Der Scherbolzen ragt weiters durch Löcher 64 in den Federplatten 35, 36 und durch ein Langloch 40 im Käfig 33.

Wenn auf den Bedienabschnitt 14 eine parallel zur Verschieberichtung 27 gerichtete, einen Schwellenwert überschreitende Aufprallkraft 28 wirkt, so kommt es zu einem Abscheren des als Scherbolzen ausgebildeten Fixierelements 49 und der Bedienabschnitt 14 kann sich in der Folge gegenüber dem Lagerabschnitt 15 verschieben, vgl. Fig. 17. Wenn die Aufprallkraft 28 winkelig zur Verschieberichtung 27 steht, so wirkt die parallel zur Verschieberichtung 27 gerichtete Kraftkomponente im Sinne eines Abscherens des Fixierelements 49, wenn diese Kraftkomponente, abzüglich von zusätzlichen Reibungsverlusten durch die Querbelastung der Wälzlagerung, den Schwellenwert überschreitet.

Auch zwei oder mehr solche Scherbolzen könnten vorgesehen sein. Wie im Zusammenhang mit dem vierten Ausführungsbeispiel beschrieben könnten auch andere Fixierelemente 49 als Scherbolzen eingesetzt werden.

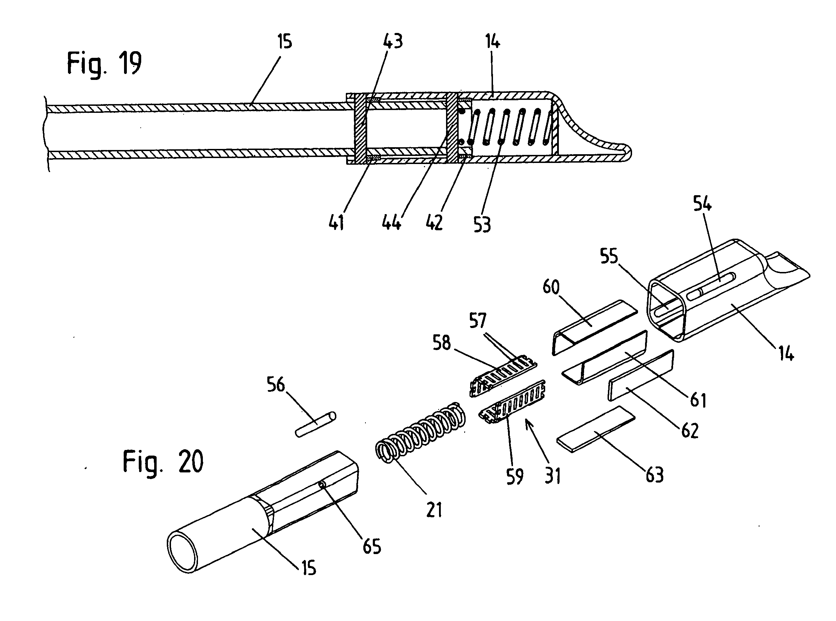

Bei den Ausführungsbeispielen, bei denen Fixierelemente 43, 44, 49 eine Verschiebung des Bedienabschnitts 14 gegenüber dem Lagerabschnitt 15 bei einer geringen einwirkenden Kraft verhindern, könnten zusätzlich auch Federn vorgesehen sein, welche, zumindest über einen Teil des Verschiebeweges, zwischen dem Bedienabschnitt 14 und dem Lagerabschnitt 15 wirken. Eine mögliche Ausführungsform, bei der sowohl Fixierelemente 43, 44 als auch eine Feder 53 vorhanden sind, ist als sechstes Ausführungsbeispiel in Fig. 19 dargestellt.

Fig. 20 zeigt ein siebtes Ausführungsbeispiel, bei dem wie beim dritten Ausführungsbeispiel eine Wälzlagerung zwischen dem Bedienabschnitt 14 und dem Lagerabschnitt 15 vorgesehen ist und der Bedienabschnitt 14 zusätzlich gegenüber dem Lagerabschnitt 15 mittels eines in Langlöcher 54, 55 des Bedienabschnitts 14 eingreifenden Bolzens 56, der Löcher 65 im Lagerabschnitt 15 durchsetzt, in achsialer Richtung geführt ist. Das ,Wälzlager 31 ist hier in Form eines Nadellagers ausgebildet, wobei die Wälzkörper 57 in Käfigen 58, 59 gehalten sind. Die Wälzkörper 57 laufen einerseits an der äußeren Oberfläche des Lagerabschnitts 15, andererseits an inneren Oberflächen von in die Ausnehmung 20 des Bedienabschnitts 14 eingesetzten Laufflächen 60, 61 ab. Zur Einstellung des Spiels dienen Einstellkeile 62, 63.

Für alle dargestellten Ausführungsbeispiele wäre es auch denkbar und möglich, eine teleskopierbare Ausbildung von Bedienabschnitt 14 und Lagerabschnitt 15 dadurch zu erreichen, dass ein vom Bedienende 13 weggerichteter Teil des Bedienabschnitts 14 in eine achsiale Ausnehmung des Lagerabschnitts 15 ragt. Zwischen diesen beiden Abschnitten wirkende Lagerteile könnten dann in analoger Weise an einer inneren Oberfläche des Lagerabschnitts 15 oder an einer äußeren Oberfläche des Bedienabschnitts 14 gehalten sein oder in achsialer Richtung (zwischen Anschlägen) beweglich in einem Zwischenraum zwischen diesen beiden Abschnitten 14, 15 angeordnet sein.

Durch die Erfindung wird bei einer einfachen Ausbildung ein effektiver Schutz des Fahrers gegenüber einem Aufprall auf den Betätigungshebel, insbesondere im Crashfall, erreicht. Beim erfindungsgemäßen Betätigungshebel kommt es hierbei bei einer auf das freie Ende des Bedienabschnitts einwirkenden, in die Verschieberichtung gerichteten Aufprallkraft zumindest bei Überschreiten eines Schwellenwertes der Größe der Aufprallkraft zu einer Verschiebung des Bedienabschnitts gegenüber dem Lagerabschnitt unter Verkürzung der Länge des Betätigungshebels.

### Legende zu den Hinweisziffern:

- 1: Lenkspindel
- 2: lenkradseitiges Ende
- 3: Manteleinheit
- 4: Trageinheit
- 5: Feststelleinrichtung
- 6: Verstellrichtung
- 7: Verstellrichtung
- 8: Betätigungshebel
- 9: Achse
- 10: Spannbolzen
- 11: Lamelle
- 12: Lamelle
- 13: Bedienende
- 14: Bedienabschnitt
- 15: Lagerabschnitt
- 16: Abschnitt
- 17: Lagerteil
- 18: Lagerteil
- 19: Schlitz
- 20: Ausnehmung
- 21: Feder
- 22: Anlagescheibe
- 23: Bolzen
- 24: Hohlraum
- 25: Ring
- 26: Ring
- 27: Verschieberichtung
- 28: Aufprallkraft
- 29: Langloch
- 30: Langloch
- 39: Bolzen
- 40: Langloch
- 41: Lagerteil
- 42: Lagerteil
- 43: Fixierelement
- 44: Fixierelement
- 45: Querbohrung
- 46: Querbohrung
- 47: Loch
- 48: Loch
- 49: Fixierelement
- 50: Querbohrung
- 51: Loch
- 52: Loch
- 53: Feder
- 54: Langloch
- 55: Langloch
- 56: Bolzen
- 57: Wälzkörper
- 58: Käfig
- 59: Käfig
- 60: Laufblech
- 61: Laufblech
- 62: Einstellkeil
- 63: Einstellkeil
- 64: Loch
- 65: Loch
- 31: Wälzlager
- 32: Kugeln
- 33: Käfig
- 34: Laufbahn
- 35: Federplatte
- 36: Federplatte
- 37: Federplatte
- 38: Federplatte

## Patentansprüche

1. Verstellbare Lenksäule für ein Kraftfahrzeug, die eine Feststelleinrichtung (5) aufweist, welche mittels eines zwischen einer Offen- und einer Schließstellung verstellbaren Betätigungshebels (8) öffen- und schließbar ist und in deren geöffnetem Zustand die Lenksäule verstellbar ist und in deren geschlossenem Zustand die eingestellte Position der Lenksäule fixiert ist, wobei der Betätigungshebel (8) einen an ein Bedienende (13) anschließenden Bedienabschnitt (14) und einen diesen mittels mindestens eines Gleit- und/oder Wälzlagers (17, 18, 31, 41) in eine Verschieberichtung (27) lagernden Lagerabschnitt (15) umfasst, **dadurch gekennzeichnet, dass** in der Schließstellung des Betätigungshebels der Bedienabschnitt (14) durch eine auf ihn in die Verschieberichtung (27) einwirkende Aufprallkraft (28) zumindest bei Überschreiten eines Schwellenwertes der Größe der Aufprallkraft derart verschiebbar ist, dass eine lineare Verstellung des Bedienabschnitts (14) gegenüber dem Lagerabschnitt (15) in die Verschieberichtung (27) unter Verkürzung der Länge des Betätigunshebels (8) erfolgt.

2. Verstellbare Lenksäule nach Anspruch 1, **dadurch gekennzeichnet, dass** zwischen dem Bedienabschnitt (14) und dem Lagerabschnitt (15) zumindest ein Fixierelement (43, 44, 49) wirkt, welches bei einer auf den Bedienabschnitt (14) in die Verschieberichtung (27) wirkenden Aufprallkraft (28), deren Größe unterhalb des Schwellenwertes liegt, eine Verschiebung des Bedienabschnitts (14) gegenüber dem Lagerabschnitt (15) blockiert.

3. Verstellbare Lenksäule nach Anspruch 2, **dadurch gekennzeichnet, dass** das Fixierelement (43, 44, 49) ein durch die Aufprallkraft (28) abscherbarer Scherbolzen ist.

4. Verstellbare Lenksäule nach einem der Ansprüche 1 bis 3, **dadurch gekennzeichnet, dass** zwischen dem Bedienabschnitt (14) und dem Lagerabschnitt (15) eine Feder (21, 53) wirkt und der Bedienabschnitt (14) gegenüber dem Lagerabschnitt (15) zumindest über einen Abschnitt des Verschiebeweges gegen die Federkraft dieser Feder (21, 53) verschiebbar ist.

5. Verstellbare Lenksäule nach einem der Ansprüche 1 bis 4, **dadurch gekennzeichnet, dass** der Lagerabschnitt (15) in eine in die Verschieberichtung (27) ausgedehnte Ausnehmung (20) des Bedienabschnitts (14) ragt.

6. Verstellbare Lenksäule nach Anspruch 5, **dadurch gekennzeichnet, dass** der Bedienabschnitt (14) von einem hülsenförmigen Handgriff gebildet wird.

7. Verstellbare Lenksäule nach einem der Ansprüche 1 bis 6, **dadurch gekennzeichnet, dass** der Bedienabschnitt (14) oder der Lagerabschnitt (15) mindestens eine in die Verschieberichtung (27) sich erstreckende Ausnehmung, vorzugsweise mindestes ein in die Verschieberichtung (27) sich erstreckendes Langloch (29, 30, 40, 54, 55), aufweist, in welches ein am anderen dieser beiden Abschnitte (14, 15) angebrachter Vorsprung, vorzugsweise Bolzen (23, 39, 56), zur Führung des Bedienabschnitts (14) in die Verschieberichtung (27) eingreift.

8. Verstellbare Lenksäule nach einem der Ansprüche 1 bis 7, **dadurch gekennzeichnet, dass** die Lagerung des Bedienabschnitts (14) gegenüber dem Lagerabschnitt (15) durch mindestens ein separates Lagerteil (17,18, 32, 41, 42, 57) erfolgt.

9. Verstellbare Lenksäule nach Anspruch 8, **dadurch gekennzeichnet, dass** mindestens zwei separate Lagerteile (17, 18, 32, 41, 42, 57) vorhanden sind, die in die Verschieberichtung (27) aneinander anschließen oder voneinander beabstandet sind.

10. Verstellbare Lenksäule nach Anspruch 9, **dadurch gekennzeichnet, dass** die Lagerung des Bedienabschnitts (14) gegenüber dem Lagerabschnitt (15) durch mindestens zwei in Form von Gleitlagerbuchsen ausgebildeten Lagerteilen (17, 18, 41, 42) erfolgt, welche jeweils an einem der beiden Abschnitte (14, 15) gehalten sind und an einer Oberfläche des anderen dieser beiden Abschnitte (14, 15) gleitend anliegen oder in einem Zwischenraum zwischen den beiden Abschnitten (14, 15) angeordnet sind und an einer Oberfläche des Bedienabschnitts (14) sowie an einer Oberfläche des Lagerabschnitts (15) gleitend anliegen.

11. Verstellbare Lenksäule nach Anspruch 9, **dadurch gekennzeichnet, dass** die Lagerung des Bedienabschnitts (14) gegenüber dem Lagerabschnitt (15) durch mindestens ein Wälzlager (31) erfolgt, welches zumindest eine Reihe, vorzugsweise mehrere Reihen, von jeweils zwei oder mehr in die Verschieberichtung (27) beabstandeten von einem Käfig (33, 58, 59) gehaltenen Wälzkörpern (32, 57) umfasst.

12. Verstellbare Lenksäule nach einem der Ansprüche 1 bis 11, **dadurch gekennzeichnet, dass** zumindest in der Schließstellung des Betätigungshebels (8) das freie Bedienende (13) des Betätigungshebels (8) der zur Fahrzeugfront gerichteten Aufprallkraft entgegengerichtet ist.

## Claims

1. Adjustable steering column for a motor vehicle, having a locking device (5) which can be unlocked and locked by means of an actuating lever (8) adjustable between an unlocking and a locking position, and in the unlocked state of which device the steering column can be adjusted, and in the locked state of which device the set position of the steering column is fixed, the actuating lever (8) comprising an operating section (14) adjoining an operating end (13), and a bearing section (15) supporting said operating section in a displacement direction (27) by means of at least one plain and/or rolling bearing (17, 18, 31, 41), **characterised in that**, in the locking position of the actuating lever, the operating section (14) can be displaced, by means of an impact force (28) acting upon it in the displacement direction (27), at least when a threshold value of the magnitude of the impact force is exceeded, in such a manner that a linear movement of the operating section (14) with respect to the bearing section (15) in the displacement direction (27) takes place, with shortening of the length of the actuating lever (8).

2. Adjustable steering column according to Claim 1, **characterised in that** at least one fixing element (43, 44, 49) acts between the operating section (14) and the bearing section (15), which element blocks a displacement of the operating section (14) with respect to the bearing section (15) in the event of an impact force (28) acting on the operating section (14) in the displacement direction (27), the magnitude of which force is below the threshold value.

3. Adjustable steering column according to Claim 2, **characterised in that** the fixing element (43, 44, 49) is a shear bolt capable of being sheared off by the impact force (28).

4. Adjustable steering column according to one of Claims 1 to 3, **characterised in that** a spring (21, 53) acts between the operating section (14) and the bearing section (15), and the operating section (14) is displaceable with respect to the bearing section (15), at least over a section of the displacement travel, against the spring force of this spring (21, 53).

5. Adjustable steering column according to one of Claims 1 to 4, **characterised in that** the bearing section (15) projects into a recess (20), extended in the displacement direction (27), of the operating section (14).

6. Adjustable steering column according to Claim 5, **characterised in that** the operating section (14) is formed by a sleeve-shaped handle.

7. Adjustable steering column according to one of Claims 1 to 6, **characterised in that** the operating section (14) or the bearing section (15) has at least one opening extending in the displacement direction (27), preferably at least one elongated hole (29, 30, 40, 54, 55) which extends in the displacement direction (27) and in which engages a projection mounted on the other of these two sections (14, 15), preferably a pin (23, 39, 56), for guiding the operating section (14) in the displacement direction (27).

8. Adjustable steering column according to one of Claims 1 to 7, **characterised in that** the supporting of the operating section (14) with respect to the bearing section (15) is effected by at least one separate bearing part (17, 18, 32, 41, 42, 57).

9. Adjustable steering column according to Claim 8, **characterised in that** at least two separate bearing parts (17, 18, 32, 41, 42, 57) are present, which parts adjoin one another or are spaced from one another in the displacement direction (27).

10. Adjustable steering column according to Claim 9, **characterised in that** the supporting of the operating section (14) with respect to the bearing section (15) is effected by at least two bearing parts (17, 18, 41, 42) configured in the form of plain bearing bushes, which are each held on one of the two sections (14, 15) and bear slidingly on a surface of the other of these two sections (14, 15), or are arranged in an interspace between the two sections (14, 15) and bear slidingly on a surface of the operating section (14) and on a surface of the bearing section (15).

11. Adjustable steering column according to Claim 9, **characterised in that** the supporting of the operating section (14) with respect to the bearing section (15) is effected by at least one rolling bearing (31), which comprises at least one row, preferably a plurality of rows, of in each case two or more rolling bodies (32, 57) held, spaced in the displacement direction (27), by a cage (33, 58, 59).

12. Adjustable steering column according to one of Claims 1 to 11, **characterised in that**, at least in the locking position of the actuating lever (8), the free operating end (13) of the actuating lever (8) is directed opposite to the impact force directed towards the vehicle front.

## Revendications

1. Colonne de direction réglable pour un véhicule automobile, laquelle comporte un dispositif de blocage (5) pouvant être ouvert et verrouillé au moyen d'un levier d'actionnement (8) déplaçable entre une position d'ouverture et une position de verrouillage, dans l'état d'ouverture duquel la colonne de direction est réglable et dans l'état de verrouillage duquel la position réglée pour la colonne de direction est bloquée, le levier d'actionnement (8) comprenant un segment de commande (14) adjacent à une extrémité de commande (13) et un segment de palier (15) permettant le logement dudit segment de commande dans une direction de déplacement (27), au moyen d'au moins un palier lisse et/ou à roulement (17, 18, 31, 41), **caractérisée en ce qu'**en position de verrouillage du levier d'actionnement, le segment de commande (14) peut être déplacé par rapport au segment de palier (15) dans la direction de déplacement (27) par une force d'impact (28) qui s'exerce sur lui dans la direction de déplacement (27), au moins en cas de dépassement d'une valeur seuil de grandeur de la force d'impact, de telle manière que le segment de commande (14) effectue un déplacement linéaire par rapport au segment de palier (15) dans la direction de déplacement (27), la longueur du levier d'actionnement (8) étant raccourcie.

2. Colonne de direction réglable selon la revendication 1, **caractérisée en ce qu'**au moins un élément de blocage (43, 44, 49) agit entre le segment de commande (14) et le segment de palier (15), lequel bloque un déplacement du segment de commande (14) par rapport au segment de palier (15) en cas de force d'impact (28) de grandeur inférieure à la valeur seuil agissant sur le segment de commande (14) dans la direction de déplacement (27).

3. Colonne de direction réglable selon la revendication 2, **caractérisée en ce que** l'élément de blocage (43, 44, 49) est un goujon de cisaillement cisaillable par la force d'impact (28).

4. Colonne de direction réglable selon l'une des revendications 1 à 3, **caractérisée en ce qu'**un ressort (21, 53) agit entre le segment de commande (14) et le segment de palier (15), et **en ce que** le segment de commande (14) est déplaçable par rapport au segment de palier (15) au moins sur une partie de la course de déplacement, contre la force de ressort dudit ressort (21, 53).

5. Colonne de direction réglable selon l'une des revendications 1 à 4, **caractérisée en ce que** le segment de palier (15) s'engage dans un évidement (20) du segment de commande (14) qui s'étend dans la direction de déplacement (27).

6. Colonne de direction réglable selon la revendication 5, **caractérisée en ce que** le segment de commande (14) est formé par une poignée en forme de manchon.

7. Colonne de direction réglable selon l'une des revendications 1 à 6, **caractérisée en ce que** le segment de commande (14) ou le segment de palier (15) comporte au moins un évidement qui s'étend dans la direction de déplacement (27), préférentiellement au moins un trou oblong (29, 30, 40, 54, 55) qui s'étend dans la direction de déplacement (27), où s'engage une saillie disposée contre l'autre segment de ces deux segments (14, 15), préférentiellement une goupille (23, 39, 56), pour le guidage du segment de commande (14) dans la direction de déplacement (27).

8. Colonne de direction réglable selon l'une des revendications 1 à 7, **caractérisée en ce que** l'accouplement du segment de commande (14) avec le segment de palier (15) est effectué par au moins une pièce de palier (17, 18, 32, 41, 42, 57) séparée.

9. Colonne de direction réglable selon la revendication 8, **caractérisée en ce qu'**au moins deux pièces de palier (17, 18, 32, 41, 42, 57) séparées sont présentées, lesquelles sont adjacentes l'une à l'autre ou espacées l'une de l'autre dans la direction de déplacement (27).

10. Colonne de direction réglable selon la revendication 9, **caractérisée en ce que** l'accouplement du segment de commande (14) avec le segment de palier (15) est effectué par au moins deux pièces de palier (17, 18, 41, 42) réalisées sous la forme de coussinets de palier lisse, lesquelles sont maintenues chacune sur un des deux segments (14, 15) et reposent de manière à pouvoir coulisser sur une surface de l'autre segment de ces deux segments (14, 15), ou sont disposées dans un interstice entre les deux segments (14, 15) et reposent de manière à pouvoir coulisser sur une surface du segment de commande (14) et sur une surface du segment de palier (15).

11. Colonne de direction réglable selon la revendication 9, **caractérisée en ce que** l'accouplement du segment de commande (14) avec le segment de palier (15) est effectué par au moins un palier à roulement (31), lequel comprend au moins une rangée, préférentiellement plusieurs rangées de deux ou plusieurs corps de roulement (32, 57) espacés dans la direction de déplacement (27) et maintenus par une cage (33, 58, 59).

12. Colonne de direction réglable selon l'une des revendications 1 à 11, **caractérisée en ce qu'**au moins en position de verrouillage du levier d'actionnement (8), l'extrémité de commande (13) libre du levier d'actionnement (8) est opposée à la force d'impact dirigée vers l'avant du véhicule.
